# EUROPEAN PATENT SPECIFICATION

(11) **EP 1 681 121 B1**
(45) Date of publication and mention of the grant of the patent: **22.06.2011**
(21) Application number: 06250231.5
(22) Date of filing: 17.01.2006
(51) Int. Cl.: B23K 9/095, B23K 11/25

(54) **Processing system**
Verarbeitungssystem
Système traitement.

(30) Priority: 17.01.2005 JP 2005008765
(43) Date of publication of application: 19.07.2006
(73) Proprietor: KAWASAKI JUKOGYO KABUSHIKI KAISHA, Kobe shi, Hyogo 650-8670 (JP); Central Motor Wheel Co., Ltd., Anjo-shi, Aichi 446-0004 (JP)
(72) Inventor: Onoue, Kazuhiko, Nishi-ku Kobe-shi Hyogo 651-2146 (JP); Yamasumi, Satoru, Itami-shi Hyogo 664-0001 (JP); Uchikoshi, Kunio, Higashinada-ku Kobe-shi Hyogo 658-0073 (JP); Iwamoto, Tetsuo, Central Motor Wheel Co., Ltd., Anjo-shi Aichi 446-0004 (JP); Suzuki, Yukimitsu, Central Motor Wheel Co., Ltd., Anjo-shi Aichi 446-0004 (JP); Arita, Ichiro, Central Motor Wheel Co., Ltd., Anjo-shi Aichi 446-0004 (JP)
(74) Representative: Taylor, Adam David

(56) References cited:
- EP-A- 1 000 699
- DE-A- 3 435 066
- DE-A- 19 732 028
- GB-A- 2 175 546
- US-B1- 6 193 142

## Description

The present invention relates to a processing system capable of efficiently and precisely processing workpieces on which processing such as welding is performed, and as disclosed in the preamble of claim 1.

Heretofore, welding has been utilized as a process for joining a plurality of members together in a variety of fields. Automation of such welding processes has been greatly advanced and, in recent years, such a processing system has emerged that automatically welds a plurality of members together at joining portions thereof to form a workpiece (such as a steel wheel for an automobile).

Furthermore, it is necessary for such a processing system that automatically welds a plurality of members together at joining portions thereof to form a workpiece to operate at higher speed and in more precise manner. For this reason, it is necessary for such a processing system that processing should be able to be performed with proper processing precision by measuring variations of individual workpieces using sensors, cycle time should be reduced, overall processing system costs should be reduced, etc.

Some conventional technologies that are used to inhibit reduction in productivity at the time of manufacturing may calculate manufacturing cost by assigning parts and part data to a plurality of different facilities, such that the overall cycle times of each facility is close to the overall cycle time of the other facilities (e.g., see Japanese Unexamined Patent Application Publication No. 2002-169839 (pages 3-9, Fig. 2), Japanese Patent and Utility Model Gazette).

In some conventional technologies, a plurality of different manufacturing lines are provided to manufacture sub-wire-harnesses for the purpose of suppressing their interim inventories as much as possible. The manufacturing lines are managed on a line by line basis to control their cycle times (e.g., see Japanese Unexamined Patent Application Publication No. HEI 11-339572 (pages 2-3, Fig. 1), Japanese Patent and Utility Model Gazette).

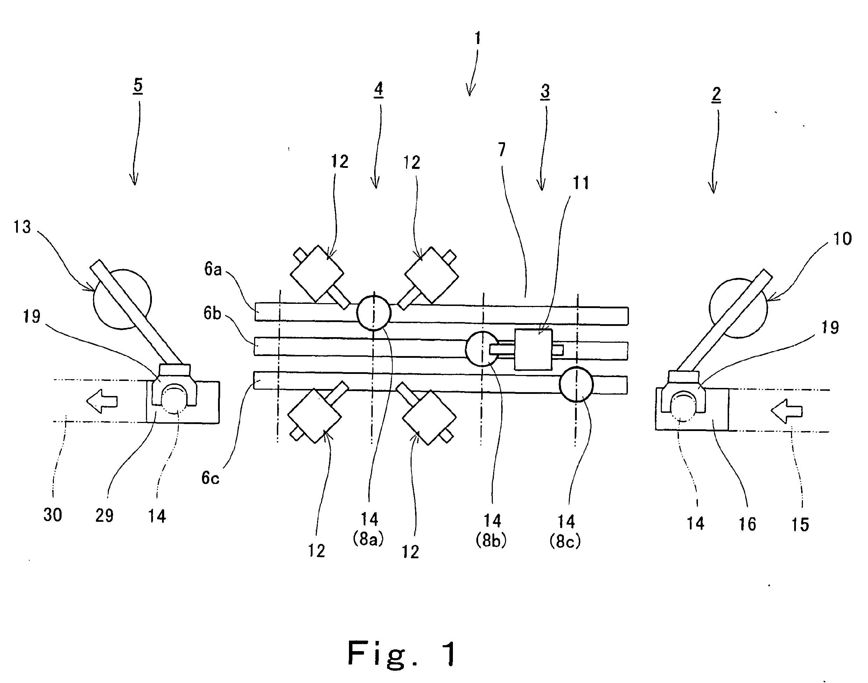

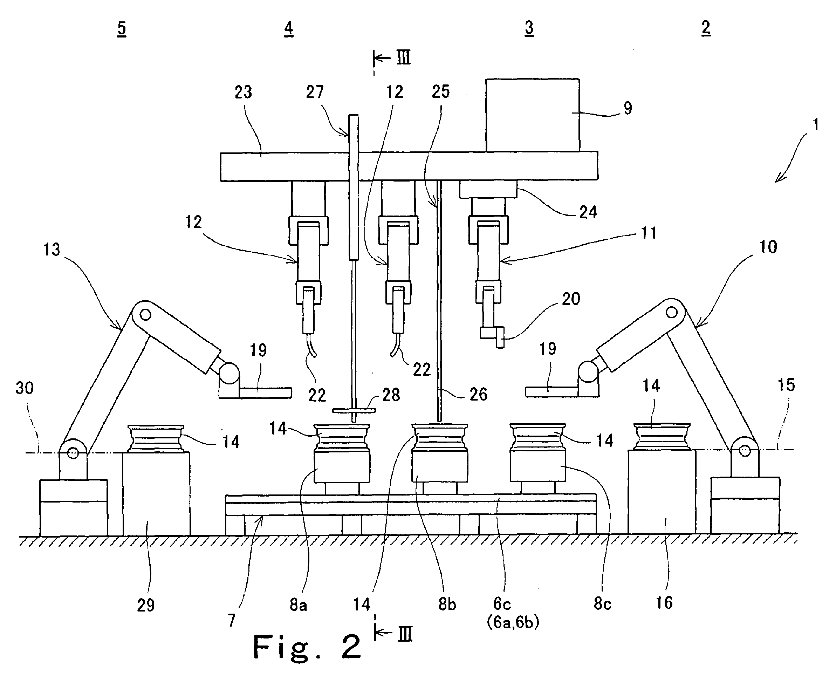

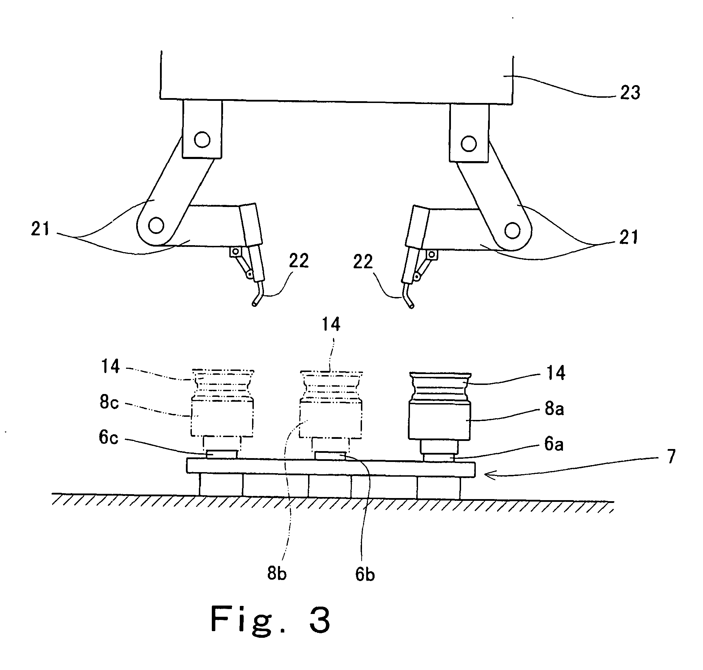

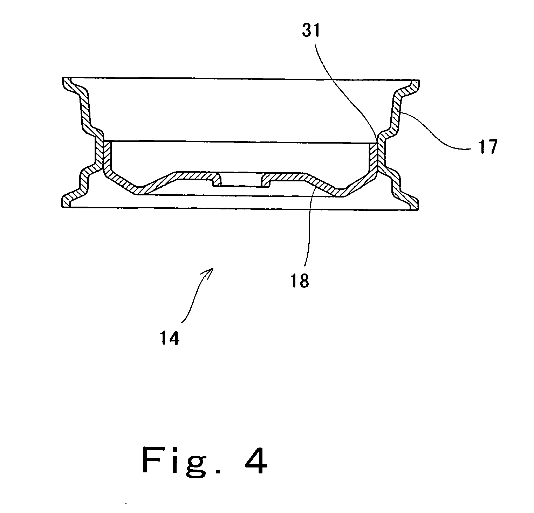

A number of conventional technologies may use touch sensing technologies to compensate for the deviation of position of a workpiece (e.g., see Japanese Unexamined Patent Application Publication Nos. 2003-285164 (page 4), 2003-53535 (page 4), and 2000-225467 (page 3, Figs. 2, 3), Japanese Patent and Utility Model Gazette). Some conventional technologies may use a welding torch to perform touch sensing by modifying a support for a welding wire (e.g., see Japanese Unexamined Patent Application Publication No. HEI 11-254142 (page 3, Fig. 1), Japanese Patent and Utility Model Gazette). Some conventional technologies may attempt to use a tungsten electrode used for arc welding as a touch sensing probe (e.g., see Japanese Unexamined Patent Application Publication No. HEI 09-216059 (pages 2-3, Figs. 3, 4), Japanese Patent and Utility Model Gazette).

However, in Japanese Unexamined Patent Application Publication No. 2002-169839, the accumulated cycle times of each facility is made to be close to cycle times of the other facilities for the purpose of calculating a manufacturing cost. In Japanese Unexamined Patent Application Publication No. HEI 11-339572, the 5 manufacturing lines are managed on a line by line basis to control their cycle times for the purpose of suppressing their interim inventories as much as possible. Unlike the present invention, none of these conventional technologies provide a slide device including a plurality of lanes, and a measurement stage and a processing stage for the slide device for the purpose of optimizing cycle time on a workpiece-by-workpiece basis.

While some conventional technologies discussed above use touch sensing, unlike the present invention, none of them use touch sensing to create a compensation table so as to enable high-precision processing.

As described above, none of the conventional technologies discussed above measure variations of individual workpieces and then operate a measuring device and a processing device efficiently by considering processing precision, overall system cost, reduction of time required for tooling change, etc.

US 6193142B1 discloses a system of the type defined in the preamble of claim 1.

Therefore, an object of the present invention is to provide a processing system capable of efficiently handling workpieces and operating a measurement Instrument and a processing device.

The present Invention provides A processing system comprising:
a carry-In stage including a carry-in device for carrying in workpieces;
an operation stage in which the workpieces are measured and processed, the operation stage being disposed In series with the carry-in stage;
a carry-out stage disposed in series with the operation stage and including a carry-out device for carrying out the workpieces;
a slide device disposed between a measurement device and a processing device of the operation stage; and
a controller configured to control the carry-in device, the slide device, the processing device, the measurement device and the carry-out device;
characterised in that:
   the operation stage includes the measurement device and the processing device in this order from a carry-in stage side thereof, the measurement device being separated from the processing device;
   the slide device includes a plurality of lanes, the plurality of lanes being respectively provided with fixing jigs movable back and forth individually; and
   the controller controls each of the plurality of lanes such that the carry-in device sequentially moves the workpieces onto the respective fixing jigs, the fixing jigs are moved along the slide device, the measurement device measures a workpiece measurement portion of each of the workpieces and the processing device processes each of the workpiece measurement portions, and thereafter the carry-out device carries the workpieces out.

In this embodiment, the fixing Jigs provided on the plurality of lanes are moved back and forth between the measurement stage and the processing stage, the workpieces fixed to the fixing jigs are efficiently conveyed, and the processing device and the measurement device are efficiently operated. Therefore, cycle time can be reduced while high precision processing is maintained. Furthermore, if some of the fixing jigs fail, the processing can be continued by conveying the workpieces along the slide device using the remaining fixing jigs.

In the processing system according to the present invention, the measurement device may be comprised of one measurement sensor and one measurement robot. In this embodiment, only one robot makes measurements at a plurality of slide devices and merely needs to change measurement points when the workpieces are changed, resulting in further cost savings.

The processing system according to the present invention may further include: an input inspection device provided in the carry-in stage, for inspecting and determining positions of the workpieces and an output inspection device provided in the carry-out stage, for inspecting the workpieces, wherein the carry-in device is comprised of a carry-in robot, the carry-out device is comprised of a carry-out robot, the workpieces are carried onto the fixing jigs from the input inspection device by the carry-in robot, the workpieces are carried onto the output inspection device from the fixing jigs by the carry-out robot. In this embodiment, carrying onto and out from the plurality of slide devices, checking the workpieces and determining the positions of the workpieces as the workpieces are carried in, and inspecting the processing results of the workpieces as the workpieces are carried out can be automated. Furthermore, changing a grip position when the type of workpiece is changed can be automated.

The processing system according to the present invention may further include a shield device provided between the measurement device and the processing device. In this embodiment, the measurement device in the measurement stage is separated from the processing device in the processing stage to thereby eliminate negative influences of vibrations, light, noises, and dusts that may otherwise be transferred between the measurement device and the processing device.

In the processing system according to the present invention, the processing device may be comprised of a welding robot, including an error measurement system configured to measure a position error between measurement point data of the workpiece measurement portion measured by the measurement robot and the workpiece measurement portion prior to welding. A controller associated with the welding robot may be configured to create a compensation table from error data measured by the error measurement system. The processing system may further include a compensation-based driving device for operating the welding robot based on the compensation table. In this embodiment, welding can be performed accurately by the welding robot based on the compensation table created from the position error between the measurement point data of the work measurement portion.

In the processing system according to the present invention, the processing device may be comprised of a welding robot configured to be controlled by the controller, the welding robot including an error measurement system and the controller including a position data generation system, wherein the position data generation system is configured to generate new position data by controlling the welding robot so as to slightly change a position and an orientation of the welding robot, separately, based on the measurement point data of the workpiece measurement portion measured by the measurement robot, and wherein the error measurement system is configured to measure a position error of the welding robot which is included in position data generated by the position data generation system, and wherein the controller is configured to create a compensation table from error data measured by the error measurement device. The processing device may further include a compensation-based driving device configured to operate the welding robot based on the compensation table. In this embodiment, welding can be performed accurately by the welding robot based on the compensation table created from the data in the vicinity of the actual work measurement portion.

In the processing system according to the present invention, the error measurement system may be comprised of a touch sensing device including a tip end of the welding robot and/or a visual recognition device including a visual sensor. In this embodiment, more accurate compensation can be performed.

In the processing system according to the present invention, the controller associated with the welding robot may be configured to create a compensation table for the workpiece measurement portion using input received from the welding robot operating on a model workpiece identical to the workpieces to be processed. In this embodiment, the model workpiece which is identical in dimension to the workpieces and whose measurement portion is accurately finished can be used to reduce the time required to create a compensation table and improve the accuracy of the compensation table.

In the processing system according to the present invention, the workpieces may be steel wheels for an automobile, the input inspection device may be configured to inspect each of the workpieces and determine a position of each workpiece based on a valve hole or a shape of each workpiece, and the output inspection device may be configured to detect whether or not a break caliper hits the wheel. In this embodiment, welding the wheels can be automated while maintaining high accuracy and reducing cycle time.

Preferred embodiments of the present invention will now be described by way of example only and with reference to the accompanying drawings in which:

Fig. 1 is a plan view schematically showing a processing system according to a first embodiment of the present invention;

Fig. 2 is a front view showing the processing system in Fig. 1;

Fig. 3 is a cross sectional view taken along line III-III of Fig. 2;

Fig. 4 is a cross sectional view showing an example of a steel wheel for an automobile to be welded with the processing system shown in Fig. 1;

Fig. 5 is a schematic view showing a manner in which welding points are detected by touch sensing in the processing system according to the present invention;

Fig. 6 is a schematic view showing a manner in which welding points are detected by a visual sensor in the processing system according to the present invention;

Fig. 7 is a schematic plan view showing a flow of steel wheels for an automobile transferred in the processing system of Fig. 1;

Fig. 8 is a view showing a time chart for welding steel wheels for an automobile in the processing system of Fig. 1; and

Fig. 9 is a plan view schematically showing a processing system according to a second embodiment of the present invention.

Hereinbelow, embodiments of the present invention will be described with reference to the drawings. Fig. 1 is a plan view schematically showing a processing system according to a first embodiment of the present invention, Fig. 2 is a front view showing the processing system of Fig. 1, Fig. 3 is a cross sectional view taken along line III-III of Fig. 2, and Fig. 4 is a cross sectional view showing an example of a steel wheel for an automobile to be welded using the processing system. In the following embodiments, a steel wheel for an automobile shown in Fig. 4 is employed as an example of a workpiece, and an example in which two members including a rim 17 on which a tire is to be mounted and a disc 18 to be attached to a car body are joined together by welding will be described. Of course, the workpiece is not limited to a wheel. Furthermore, another example in which an operation stage is divided into a measurement stage and a processing stage will also be described.

As shown in the drawing, a processing system 1 comprises four stages including a carry-in stage 2, a measurement stage 3, a processing stage 4, and a carry-out stage 5, that are arranged in series from the right side of the drawing. A slide device 7, which includes three lanes 6a, 6b, 6c in this embodiment, is provided between the measurement stage 3 and the processing stage 4. While the present example of the slide device 7 includes three lanes 6a, 6b, 6c, this number of lanes is just an example and any plural number of lanes may be used instead. Fixing jigs 8a, 8b, 8c, which may be moved back and forth along the slide device 7 (in the right and left direction of the drawing) with a high degree of precision, are respectively provided on the lanes 6a, 6b, 6c. A controller is designated at 9 and configured to perform control such that a carry-in robot 10 described below sequentially carries the wheels 14 onto respective fixing jigs 8a, 8b, 8c, the fixing jigs 8a, 8b, 8c are moved along the lanes of the slide device 7, a measurement robot 11 described below measures workpiece measurement portions, a welding robot 12 described below welds the workpiece measurement portions, and thereafter a carry-out robot 13 carries the wheels 14 out. The controller 9 can be comprised of a personal computer or other suitable computing device for example. While a central controller is depicted, it will be appreciated that the control functions described herein alternatively may be divided among a plurality of distributed controllers assigned to the various components of the processing system 1. For example, one controller may control all welding robots, each welding robot may have its own controller, etc.

Furthermore, in this embodiment, the carry-in robot 10 serves as a carry in device in the cary-in stage 2, the measurement robot 11 serves as a measurement device in the measurement stage 3, the welding robot 12 serves as a processing device in the processing stage 4, and the carry-out robot 13 serves as a carry-out device in the carry-out stage 5. Thus, in this embodiment, each of the wheels 14 is forwarded from right to left in the drawing, and, at each of the stages, is transferred, measured, or processed by one of the robots 10 to 13.

The carry-in stage is provided with a conveyer 15 for conveying the wheels 14 and an input inspection device 16 for inspecting position information of wheels 14 carried in by the conveyer 15. The input inspection device 16 is configured to inspect the position of a valve hole (air inlet hole) of each of the wheels 14 using a light sensor. Based on the position of the valve hole, a coordinate system of the wheel as carried in (for example, a rotational angle, a positional deviation of the wheel with respect to a reference point, etc.) is determined. The input inspection device 16 may be any suitable device that is capable of detecting a reference position of a coordinate system of a workpiece.

Thereafter, the wheels 14 for which the coordinate systems were determined are carried by the carry-in robot 10 provided in the carry-in stage 2 and placed onto the fixing jigs 8a, 8b, 8c located on the slide device 7 in the measurement stage 3. The carry-in robot 10, is typically an articulated robot capable of carrying the wheels 14 from the input inspection device 16 and placing the wheels 14 onto any of the plurality of fixing jigs 8a, 8b, 8c. The carry-in robot 10 is provided with a grip 19 capable of handling a wheel 14, with the wheel 14 being kept flat as illustrated in Fig. 4.

The measurement stage 3 is provided with the measurement robot 11 for measuring a coordinate system of each of the wheels 14 carried onto one of the plurality of the fixing jigs 8a, 8b, 8c located in a predetermined location, with the wheel 14 kept in a predetermined orientation. In this example, a laser sensor 20 is provided on a tip of an arm of the measurement robot 11, and a coordinate system of the wheel 14 determined by the laser sensor 20 is inputted into the controller 9. The measurement robot 11 can also be an articulated robot.

The coordinate system of the wheel 14 determined by the measurement robot 11 is used in determining processing points (corresponding to workpiece measurement portions) in the next processing stage 4. The wheels 14 measured by the measurement robot 11 are conveyed to the processing stage 4 by the fixing jigs 8a, 8b, 8c, while keeping their correct coordinate systems unchanged.

In this embodiment, the measurement device in the measurement stage 3 is comprised of one measurement robot 11 with a laser sensor 20, thereby enabling simultaneous measurements at a plurality of lanes 6a, 6b, 6c and effecting quick position change when the workpiece is changed. Use of one robot for these functions yields desirable cost savings.

The processing stage 4 is provided with four welding robots 12 for welding the wheels 14. In this embodiment, two of the welding robots are located in the left and right sides of the slide device 7 (i.e., vertically shown in Fig. 1) and the remaining two welding robots are located along a sliding direction of the slide device 7 (i.e., horizontally shown in Fig. 1). These welding robots 12 are configured to be able to perform four welding operations simultaneously by extending their arms 21 to any locations at the three lanes 6a, 6b, 6c provided in the slide device 7. These welding robots can also be articulated robots. Each of the welding robots is provided with a welding torch at a tip end thereof. With these four welding robots 12 provided, welding can be performed by any of the welding robots 12 onto any of the respective wheels 14 fixed to the fixing jigs 8a, 8b, 8c. Thus, in this example, if a wheel 14 has four spots to be welded, these welding operations can be started simultaneously and ended simultaneously, leading to reduction of processing time.

As shown in Fig. 2, the measurement robot 11 provided in the measurement stage 3 and the welding robots 12 provided in the processing stage 4 are located on separate stands 23, 24, respectively. Provision of the measurement robot 11 and the welding robots 12 on the separate stands 23, 24 prevents any vibrations generated by the welding robots 12 at the time of processing from being transmitted to the measurement robot 11, thereby easing negative influences on the measurement operations of the measurement robot 11.

A shield device 25 for shielding between the measurement robot 11 and the welding robots 12 is provided between the measurement robot 11 and the welding robots 12. The shielding device 25 includes a curtain 26 extending to a location above the wheel 14. The curtain 26 prevents spatter, etc. from falling toward a side on which the measurement robot 11 is positioned at the time of welding.

In addition to the above-described easing of negative effects of the vibrations of the welding robots 12 on the measurement robot 11, by providing the measurement robot 11 and the welding robots 12 on separate structures and providing the shielding device 25 between the measurement robot 11 and the welding robots 12, the negative effects of light, noises, spatter, etc., at the time of welding on the measurement robot 11 are mitigated.

In the processing stage 4, a shielding device 27 is provided at an approximate center between the welding robots 12 arranged in the sliding direction of the slide device 7. The shielding device 27 is provided with a spatter cover 28 capable of moving up and down at an approximate center of the wheel 14. This spatter cover 28 can be moved down to an approximate middle of the wheel 14 to prevent spatter from falling down from a welding portion and adhering to an attachment surface or an ornamental surface of the wheel 14.

The slide device 7 is provided with three lanes 6a, 6b, 6c. The lanes 6a, 6b, 6c are respectively provided with the fixing jigs 8a, 8b, 8c which may be moved back and forth along the slide device 7 (in the right and left direction of the drawing). These fixing jigs 8a, 8b, 8c are capable of respectively and accurately sliding along the lanes 6a, 6b, 6c on their own (for example, with the position error based on the overall length of the slide being on the order of 1/100 mm), traveling between the carry-in side and the carry-out side.

Each of the fixing jigs 8a, 8b, 8c according to this embodiment includes thereon a fixing member (not shown) capable of fixing thereto a wheel 14 serving as the workpiece, with the wheel 14 being kept flat. In this embodiment, since the workpiece is a wheel 14, each of the fixing jigs 8a; 8b, 8c also has a function of rotating a wheel 14 in a horizontal plane. The slide device 7 is provided with, for example, position sensors along the slide device 7 at predetermined positions for detecting positions of the fixing jigs 8a, 8b, 8c. The above described controller 9 is configured to perform control such that the fixing jigs 8a, 8b, 8c are conveyed back and forth with a high degree of precision.

A cycle of moving the fixing jigs 8a, 8b, 8c back and forth is set so as to minimize cycle time and efficiently operate the welding robots 12 (processing devices) and the measurement robot 11 (measurement device). Furthermore, the optimum number of lanes 6a, 6b, 6c are determined and then the number of fixing jigs 8a, 8b, 8c requiring precision are reduced, thereby allowing the costs of the processing system 1 to be reduced.

With the slide device 7 comprising the plurality of lanes 6a, 6b, 6c along which the plurality of fixing jigs 8a, 8b, 8c are individually and respectively moved, even if some of the fixing jigs 8a, 8b, 8c and the lanes 6a, 6b, 6c of the slide device 7 fail, the workpieces can be continuously processed by using the remaining fixing jigs 8a, 8b, 8c and the lanes 6a, 6b, 6c of the slide device 7.

The optimum number of lanes of the slide device 7 in the first embodiment can be determined by the following relationships.

The number of lanes is set to "2" if the conveying time is relatively short such as, for example:
1. if X ≈ Y + Z (i.e. X is approximately equal to Y+Z, which occurs, for example, when measurement time is long and approximately equal to processing time + conveying time required (for carrying-in + sliding movement + carrying-out)), or
2. if Y ≈ X + Z (i.e. Y is approximately equal to X+Z, which occurs, for example, when processing time is long and approximately equal to measurement time + conveying time required (for carrying-in + sliding movement + carrying-out)),
where X is measurement time, Y is processing time, Z is conveying time required (for carrying-in + sliding movement + carrying-out), and p is Z/(X + Y) which is a ratio of conveying time Z to (measurement time X + processing time Y). The closer the above equality relationships are to true, the higher the efficiency is.

The number of lanes is set to "3" if X, Y, and Z are substantially equal to each other such as, for example:
3. if X ≈ Y ≈ Z (measurement time is approximately equal to processing time, which is approximately equal to conveying time required (for carrying-in + sliding movement + carrying-out)). The closer the above equality relationship is to true, the higher the efficiency is.

The number of lanes is set to an integer close to "2p + 2" if the conveying time is relatively long such as, for example:
4. if p(X + Y) ≈ Z (p >= 1) (i.e. conveying time required for (carrying-in + sliding movement + carrying-out) is longer than measurement time + processing time). The closer the above equality relationship is to true, the higher the efficiency is. For example, the number of lanes = (2p + 2) = 4 if p = 1. The number of lanes = (2p + 2) = 5 if p = 1.5. The number of lanes = (2p + 2) = 6 if p = 2. The number of lanes = (2p + 2) = 7 if p = 2.5. The number of lanes = (2p + 2) = 8 if p = 3.

In the manner described above, the number of lanes are determined. In the first embodiment, the number of lanes is determined to be three lanes 6a, 6b, 6c.

Once the number of lanes is determined, a cycle time of each stage is adjusted such that an optimum operation time is allocated thereto, thereby allowing dead time to be reduced. In this manner, the number of lanes can be efficiently determined and time can be efficiently allocated.

The carry-out stage 5 is provided with the carry-out robot 13 capable of carrying out wheels 14 processed in the processing stage 4 from an end of the slide device 7. The carry-out robot 13, is typically an articulated robot that is capable of carrying out any of the wheels 14 fixed to the plurality of fixing jigs 8a, 8b, 8c onto an output inspection device 29. Each of the wheels 14 carried out onto the output inspection device 29 is inspected to determine whether or not a break caliper hits the wheel 14. Upon completion of inspection by the output inspection device 29, the wheels 14 are conveyed out by a conveyor 30. The output inspection device 29 may be any device that is capable of inspecting, measuring, and finishing an inspected portion of a workpiece.

Like the carry-in robot 10 in the carry-in stage 2, the carry-out device in the carry-out stage 5 is comprised of an articulated robot, such that the number of devices necessary for carrying out the workpieces from the plurality of lanes 6a, 6b, 6c and inspecting and positioning the workpieces as the workpieces are carried out can be minimized.

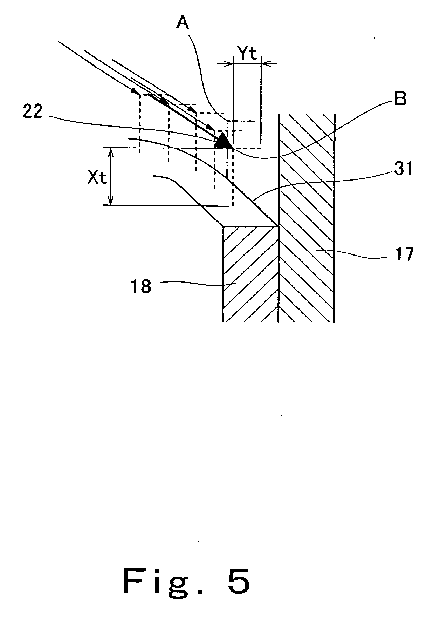

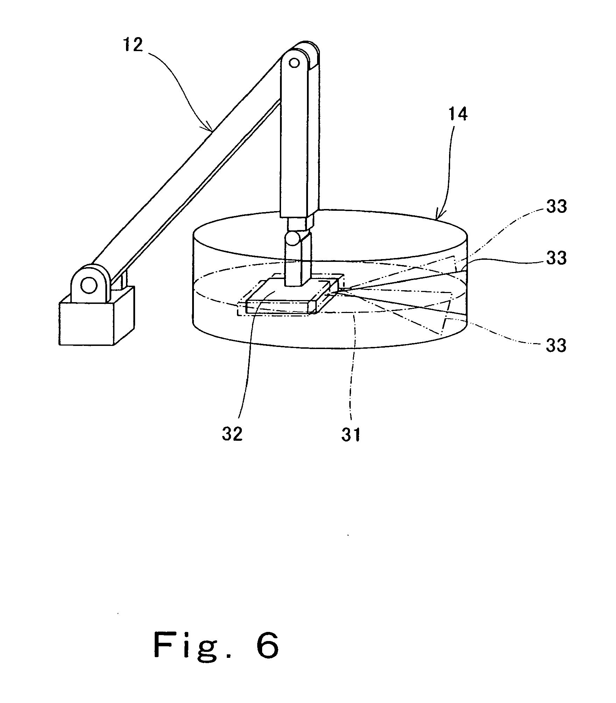

Fig. 5 is a schematic view showing a manner in which welding points are detected by touch sensing in the processing system according to the present invention, and Fig. 6 is a schematic view showing a manner in which welding points are detected by a visual sensor in the processing system according to the present invention.

As described above, the wheels 14 are measured by the measurement robot 11 to determine a coordinate system for the processing points, for example, and conveyed to the processing stage 4 by the slide device 7 and, for these wheels 14, the measurement robot 11 and the welding robots 12 are separately provided. Therefore, it is difficult to make the coordinate system determined by the measurement robot 11 identical to the coordinate system used by the welding robots 12.

As shown in the drawings, the welding robots 12 are each provided with a final position error determination system (also referred to as final position error determination means) for determining a coordinate systems of a workpiece measurement portion 31 to be finally processed with respect to the coordinate system determined by the measurement robot 11 before a welding operation is performed by the welding robots 12.

One embodiment of the final position error determination system may comprise an error measurement device (also referred to as an error measurement means) of a welding robot 12 for measuring errors between desired points and points actually reached by the welding robot 12 when the welding robot 12 is driven in a prescribed orientation to perform processing based on a plurality of measurement point data at which a welding robot is configured to perform processing measured in the measurement stage 3, a driving device also referred to as a driving means) configured to drive the welding robot 12 based on a plurality of measurement point data at which a welding robot is configured to perform processing to sequentially measure the errors, a compensation table created by the controller associated with the welding robot for storing compensation data corresponding to the robot positions calculated from the error data measured by the error measurement device, wherein the driving device is a compensation-based driving device (compensation-based driving means) configured to precisely operate the welding robot 12 based on a plurality of measurement point data at which a welding robot is configured to perform processing and using the compensation table. It will be understood that "driving" is used herein to mean moving or actuating the welding robot and that the driving device may be implemented by the controller and configured to send signals to the welding robot to "drive" or actuate the robot.

Another embodiment of the final position error determination system (final position error determination means) may comprise a position data generation device (position data generation means) for newly generating a plurality of measurement point data based on which a welding robot is driven by slightly changing or adjusting a tip end position of the welding robot 12 in a predetermined direction while keeping a tool orientation of a welding robot 12 unchanged, a driving device (driving means) configured to drive the welding robot 12 based on the measurement point data, an error measurement device (error measurement means), a compensation table created by the controller associated with the welding robot for storing compensation data corresponding to robot positions calculated from the error data measured by the error measurement device, wherein the driving device is a compensation-based driving device (compensation-based driving means) for precisely operating the welding robot 12 based on a plurality of measurement point data at which a welding robot is configured to perform processing and using the compensation table.

Another embodiment of the final position error determination device (final position error determination means) may comprise an error measurement device (error measurement means) of a welding robot 12 for measuring errors between desired points and points actually reached by the welding robot 12 by slightly changing a tool orientation of the welding robot 12 in a predetermined direction while keeping a tip end of the welding robot 12 unchanged, a driving device (driving means) for driving the welding robot 12 based on a plurality of measurement point data at which a welding robot is configured to perform processing to sequentially measure the errors, a position data generation system (position data generation means) for newly generating a plurality of measurement point data based on which a welding robot is driven by slightly changing the tip end of the welding robot 12 in a predetermined direction while keeping a tool orientation of the welding robot 12 unchanged, wherein the driving device (driving means) is configured to drive the welding robot 12 based on the measurement point data, an error measurement device (error measurement means) for measuring errors, and a compensation table created by the controller for storing compensation data corresponding to the robot positions calculated from the error data measured by the error measurement device, wherein the driving device is a compensation-based driving device (compensation-based driving means) for precisely operating the welding robot 12 based on a plurality of measurement point data at which a welding robot is configured to perform processing and using the compensation table.

In the above embodiment, as the final position error determination system, touch sensing detection that utilizes a welding torch 22 provided at the tip end of the welding robot 12, and a visual recognition detection that utilizes a visual sensor provided at the tip end of the welding robot 12 may be employed, as described below.

In the touch sensing detection embodiment shown in Fig. 5, a relative relationship between a wheel coordinate system (portion A) represented by a coordinate system determined by the measurement robot 11 in the measurement stage 3 and a wheel coordinate system (portion B) represented by a coordinate system of the welding robot 12 will be predetermined by calculation using a model workpiece.

The welding robot 12 converts values actually measured in the measurement stage 3 (reference points for touch sensing) based on the relative relationship, and when the welding robot is driven, final position errors are obtained by touch sensing as operation paths (Xt, Yt) (in this example, starting from portion B). In the touch sensing, an actual coordinate system is obtained by abutting a tip end of a welding torch 22 having a pre-set coordinate point to a wheel 14 using a welding robot 12. In this manner, errors are measured by touch sensing. With the touch sensing thus performed, groove precision can be compensated for, accurately, to the order of a fraction of a millimeter.

The final position errors thus obtained can be applied to later processing by creating an error compensation table from the operation paths (Xt, Yt). Use of touch sensing to determine and compensate for errors between actual positions and calculated positions enables highly precise compensation data to be tabulated. This compensation table is newly created when the type of workpiece is changed.

Furthermore, use of the touch sensing enables a compensation table to be created precisely and simply, thereby improving processing precision, even if the measurement robot 11 and the welding robots 12 are provided separately from each other.

The processing precision can be further improved by creating not only a compensation table for a typical processing movement at a processing point (workpiece measurement portion) but also a compensation table for slightly different positions in a vicinity thereof.

On the other hand, as shown in Fig. 6, the final position error determination system may be provided in the form of a visual sensor 32. Instead of the welding torch 22 of the welding robot 12 in the welding stage, the visual sensor 32, whose field of view is within a vicinity of a position of a tip end of the tool, is provided on the welding robot 12. A compensation table is created for slightly varying positions of the tip end of the tool of the welding robot 12.

Where arc welding, for example, is performed by the above welding robot 12, a time required to create a compensation table can be significantly shortened if the visual sensor 32 serving as an error measurement device (error measurement means), whose field of view is within a vicinity of a position of the tip end of the tool of the welding robot 12, can be reproducibly and detachably attached to the tip end of the tool of the welding robot 12, if touch sensing is used only for the purpose of the calibration of the tip end of the tool, and if position information 33 of the visual sensor 22 is used for the error measurement. The visual sensor 22 may be calibrated using touch sensing.

Although touch sensing is precise, such measurements take a long time. Therefore, use of a visual sensor 32 calibrated using touch sensing enables creation of a compensation table that is as precise as that obtained by touch sensing at high speed.

Use of a model workpiece having a size identical to that of an actual workpiece and a measurement portion finished precisely for creation of a compensation table enables the measurement precisions of the touch sensing and the visual sensor to be improved, the creation time of the compensation table to be shortened, and the compensation table to be created more precisely.

The above embodiment ensures processing accuracy while providing the advantage of eliminating negative influences that may be transferred between the measurement and the processing due to the separation of the measurement robot 11 and the welding robots 12.

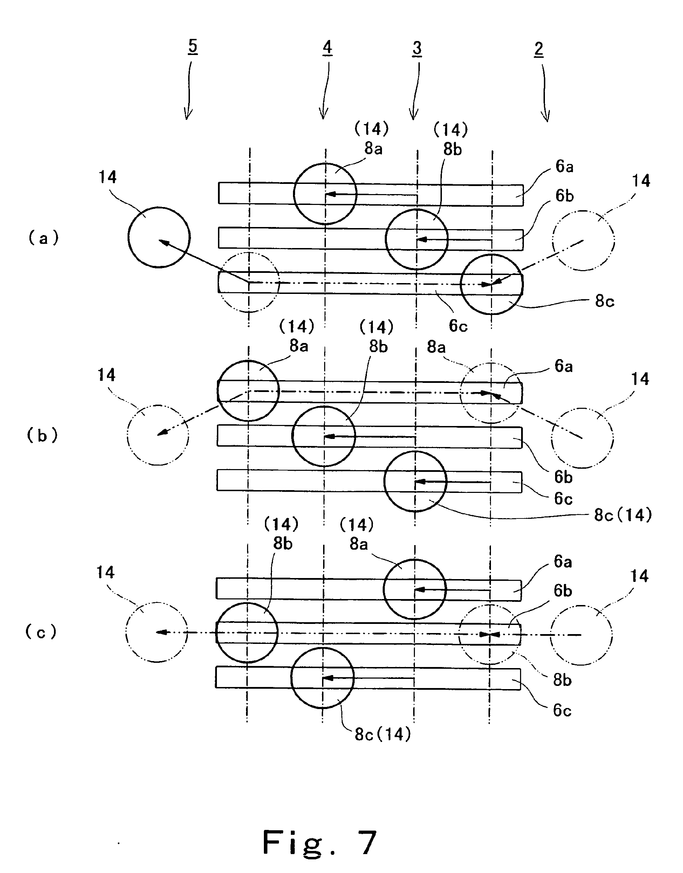

Fig. 7 is a schematic plan view showing a flow of steel wheels for an automobile conveyed in the processing system of Fig. 1. Vertical dot dashed lines shown in the drawing indicate the positions of "carry-in," "measurement," "welding," and "carry-out" from a right side of the drawing. The wheels 14 are continuously processed in this order by the processing system 1. Hereinafter, description will be provided with reference to reference numerals in Fig. 1.

As shown in the drawing, the wheels 14 conveyed into the carry-in stage 2 are each carried by the carry-in robot 10 onto one of fixing jigs 8a, 8b, and 8c, which are mounted on respective lanes 6a, 6b and 6c of a slide device 7, in this order from top to bottom. The wheels 14 are conveyed by the fixing jigs 8a, 8b, and 8c to the measurement stage 3 along the slide device 7, where a workpiece measurement portion of each of the wheels 14 is measured by the measurement robot 11. Upon completion of the measurement, the wheels 14 are conveyed to a processing stage 4 along the slide device 7, where predetermined welding is performed by welding robots 12 to the wheels 14. Upon completion of the welding, the wheels 14 are sequentially conveyed to the carry-out stage 5, where the wheels 14 are carried out by the carry-out robot 13 from the carry-out stage 5. Measurements and processing are sequentially performed by repeating the above described steps in the order of (a), (b), and (c) in Fig. 7, thereby allowing the wheels 14 to be continuously conveyed and processed using the 3 lanes 6a, 6b and 6c in a short time.

The above operations as well as the inspection of processing results can be automated. Furthermore, when the workpiece is changed, position changes can be done quickly and inexpensively.

Consequently, the measurement device and the processing devices are efficiently operated to thereby reduce cycle time, and the number of fixing jigs 8a, 8b, and 8c requiring high precision is decreased to thus reducing costs and minimizing the time required for tooling changes associated with changing of the type of workpiece. Moreover, even if some of the fixing jigs 8a, 8b, 8c fail, the processing can be continued using the remaining fixing jigs. [Example 1]

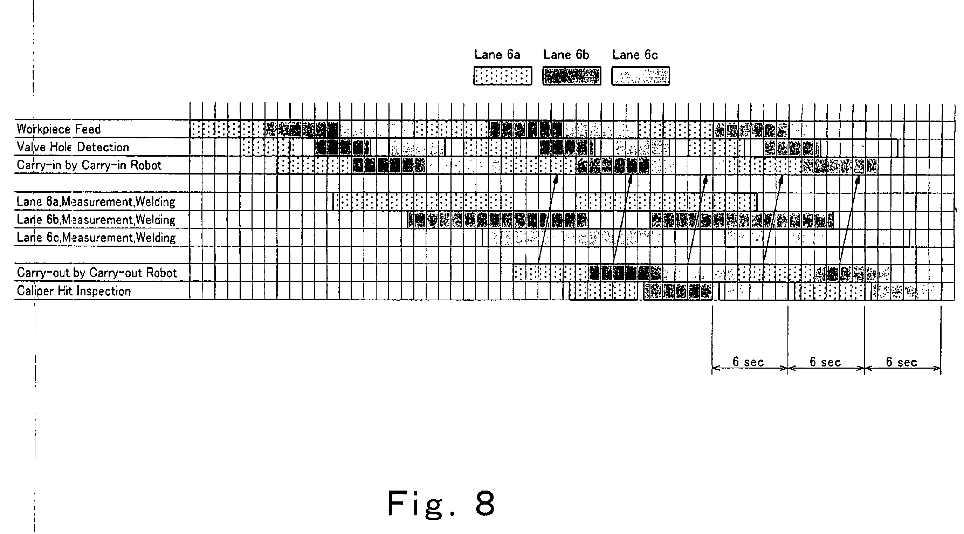

Fig. 8 is a view showing a time chart for welding steel wheels for an automobile in the processing system of Fig. 1. Hereinafter, an example in which steel wheels 14 for an automobile are welded by the welding robots 12 will be described. In the example, the wheels 14 are welded using the slide device 7 including the above described three lanes 6a, 6b, 6c. In Fig. 8, a different pattern is used to indicate each of the three lanes. The lanes 6a, 6b, 6c are shown in this order from a left side of the field under "workpiece feed."

As shown in the drawing, the operations of "workpiece feed," "valve hole detection," "carry-in by carry-in robot," "lane 6a: measurement, welding," "lane 6b: measurement, welding," "lane 6c: measurement, welding," "carry-out by carry-out robot," and "caliper hit inspection" are performed in this order from lane 6a to lane 6b to lane 6c.

One block shown in the drawing represents approximately 1 second. According to the processing system 1, a cycle time of the caliper hit inspection can be set to 6 seconds as shown in the bottom of the drawing.

Therefore, arc-welding of the steel wheels 14 for an automobile according to this time chart provides for a high speed and high precision processing system capable of achieving a cycle time of 6 seconds for the caliper hit inspection, for example, and thus makes it apparent that operation efficiency can be significantly improved even though the measurement device and the processing devices are provided separately from each other.

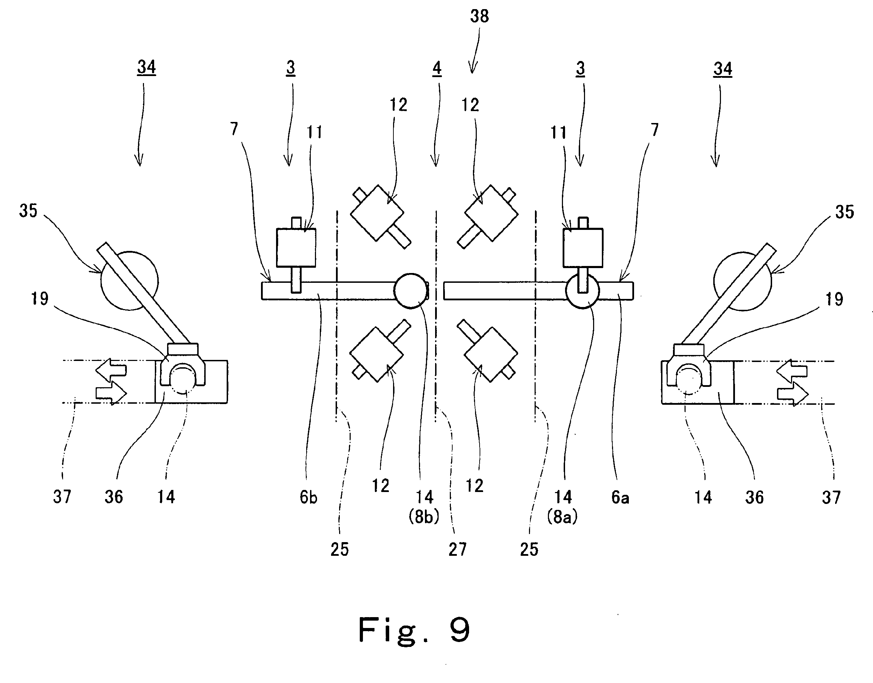

Fig. 9 is a plan view schematically showing a processing system according to a second embodiment of the present invention. In the second embodiment, wheels 14 are conveyed from left and right side portions to a central portion of the processing system 38 as shown in the drawing. Similar elements as in the first embodiment are designated by similar reference numerals as in Fig. 1 and no further explanation will be provided.

As shown in the drawing, in the second embodiment, carry-in and carry-out stages 34 are located in left and right sides of the drawing and measurement stages 3 are respectively located inside the carry-in and carry-out stages 34, and a processing stage 4 is located between the measurement stages 3. Slide devices 7 are respectively provided between one of the measurement stages 3 and the processing stage 4 and between the other of the measurement stages 3 and the processing stage 4. In this embodiment, the left and right side slide devices 7 are each comprised of one of lanes 6a, 6b. While, in the second embodiment, the slide devices 7 comprising the left and right side lanes 6a, 6b are shown as an example, the number of lanes may be more than one for each side and not limited to the present embodiment.

The carry-in and carry-out stages 34 are respectively provided with carry-in and carry-out robots 35 which are respectively carry-in and carry-out devices, the measurement stages 3 are provided with the measurement robots which are measurement devices, and the processing stage is provided with the welding robots 12 which are processing devices. These cany-in and carry-out robots 35, measurement robots 11, and welding robots 12 are arranged so as to sequentially measure and weld wheels 14 conveyed inwardly and alternately by the left and right side slide devices. These carry-in and carry-out robots 35, measurement robots 11, and welding robots 12 are controlled such that the right side and the left side operate in a coordinated manner. Reference numeral 36 designates input and output inspection devices, each of which has both functions of the input inspection device 16 and the output inspection device 29 of the first embodiment.

In the above embodiment, a shielding device 27 is provided between the left and right side slide devices 7, and shielding devices 25 are also respectively provided between one of the measurement stages 3 and the processing stage 4 and between the other of the measurement stages 3 and the processing stage 4.

In the above embodiment, like the first embodiment, a final error determination system (final error determination means) for determining final positional errors of a workpiece measurement portion 31 from a coordinate system determined in each of the measurement stage 3 and a coordinate system determined in the processing stage 4 is provided. Since the structures of the final error determination system are identical to the structures of the first embodiment, no further explanation will be provided.

According to the processing system 38 of the second embodiment constructed as described above, wheels 14 are welded in a manner described below.

Wheels 14 carried into the carry-in and carry-out stages 34 from the left and right sides of the drawing are inspected by the input and output inspection devices 36 to determine the positions of valve holes thereof, which in turn determine coordinate systems thereof as the wheels 14 are carried in. These wheels 14 are carried by the carry-in and carry-out robots 35 and placed onto fixing jigs 8a, 8b of the slide devices 7. The wheels 14 carried and placed onto these fixing jigs 8a, 8b are measured by the measurement robots 11 in the measurement stage 3 to determine coordinate systems of workpiece measurement portions thereof, then conveyed to the process stage 4, and welded by the welding robots 12. Like the first embodiment, a compensation table for final position errors is created and the coordinate system for processing points is modified.

In the above embodiment, the wheels 14 conveyed into the processing stage 4 can be simultaneously welded by the four welding robots 12 shown in the left and right side of the drawing.

The wheels 14 thus welded are conveyed back into the measurement stages 3 from the processing stage 4 by the slide devices 7. The wheels 14 conveyed back to ends of the measurement stages 3 are carried out onto the input and output inspection devices 36 by the carry-in and carry-out robots 13. The wheels 14 carried out onto the input and output inspection devices 36 are inspected to determine whether or not a caliper hits the wheels 14. Upon completion of the inspection, the wheels 14 are conveyed out by carry-in and carry-out conveyors 37.

In the second embodiment, operations between the left and right sides of the processing system as shown in the drawing are progressed in a coordinated manner. The wheels 14 are sequentially conveyed into the processing stage 4, welded by the welding robots 12, and conveyed into the measurements stages 3. After the wheels 14 are carried out from the input and output inspection devices 36, new wheels 14 are carried onto the input and output inspection devices 36, conveyed for welding, and so on. In the second embodiment, even if one of the left and right fixing jigs 8a, 8b fails, the processing can be continued by using the other one of the fixing jigs to convey the wheels 14 (workpieces) along a corresponding one of the slide devices 7.

Determination of which embodiment of the processing system (processing system 38 as in the second embodiment or the processing system 1 as in the first embodiment) should be employed depends on the conditions such as installation space, the type of workpiece, etc.

In the above embodiments, a steel wheel 14 for an automobile is employed as an example of the workpiece, however, it will be appreciated that the workpiece need not be limited to a steel wheel for an automobile.

## Claims

1. A processing system comprising:
a carry-in stage (2) including a carry-in device (10) for carrying in workpieces (114);
an operation stage (3,4) in which the workpieces are measured and processed, the operation stage being disposed in series with the carry-in stage;
a carry-out stage (5) disposed In series with the operation stage and including a carry-out device (13) for carrying out the workpieces;
a slide device (7) disposed between a measurement device (11) and a processing device (12) of the operation stage; and
a controller (9) configured to perform control of the carry-in device, the slide device, the processing device, the measurement device and the carry-out device;
**characterised in that**:
the operation stage includes the measurement device and the processing device in this order from a carry-in stage side thereof, the measurement device being separated from the processing device;
the slide device includes a plurality of lanes (6a, 6b, 6c), the plurality of lanes being respectively provided with fixing jigs (8a, 8b, 8c) movable back and forth individually; and
the controller (9) is configured to perform control such that the carry-in device sequentially moves the workpieces onto the respective fixing jigs, the fixing jigs are moved along the slide device, the measurement device measures a workpiece measurement portion of each of the workpieces and the processing device processes each of the workpiece measurement portions, and thereafter the carry-out device carries the workpieces out.

2. The processing system according to Claim 1, wherein the measurement device(11) is comprised of one measurement sensor (20) and one measurement robot (11).

3. The processing system according to Claim 2, further comprising:
an input inspection device (16) provided In the carry-in stage, (2) configured to inspect, and determine positions of the workpieces (14): and
an output Inspection device (29) provided in the carry-out stage (5), configured to inspect the workpieces,
wherein the carry-in device (10) is comprised of a carry-in robot (10), the carry-out device (13) is comprised of a carry-out robot (13), the workpieces are carried onto the fixing jigs (8a, 8b, 8c) from the input inspection device by the carry-in robot, and the workpieces are carried onto an output inspection device from the fixing Jigs by the carry-out robot.

4. The processing system according to Claim 3, wherein the workpieces (14) are steel wheels for an automobile, the input inspection device (16) is configured to inspect each of the workpieces and determine a position of each workpiece based on a valve hole or a shape of each workpiece, and the output inspection device (29) is configured to detect whether or not a break caliper hits the wheel.

5. The processing system according to Claim 2, 3 or 4, wherein the processing device (12) is comprised of a welding robot (12); and
wherein the welding robot Includes an error measurement system configured to measure a position error between measurement point data of the workpiece measurement portion (31) measured by the measurement robot and the workpiece measurement portion prior to welding;
wherein the controller (9) is configured to create a compensation table from error data measured by the error measurement system; and
wherein the processing system further includes a compensation-based driving device for Operating the welding robot based on the compensation table.

6. The processing system according to Claim 2, 3 or 4, wherein the processing device (12) is comprised of:
a welding robot (12) configured to be controlled (9) by the controller, the welding robot including an error measurement system and the controller including a position data generation system, wherein the position data generation system is configured to generate new position data by controlling the welding robot so as to slightly adjust a position and an orientation of the welding robot, separately, based on the measurement point data of the workpiece measurement portion measured by the measurement robot, and wherein the error measurement system is configured to measure a position error of the welding robot which is included in position data generated by the position data generation system, and wherein the controller is configured to create a compensation table from error data measured by the error measurement device; and
a compensation-based driving device configured to operate the welding robot based on the compensation table.

7. The processing system according to Claim 5 or 6, wherein the error measurement system is comprised of a touch sensing device including a tip end of the welding robot (12) and/or a visual recognition device including a visual sensor (32).

8. The processing system according to Claim 7, wherein the controller (9) for the welding robot (12) is configured to create a compensation table for the workpiece measurement portion (31) using input received from the welding robot operating on a model workpiece identical to the workpieces to be processed.

9. The processing system according to any preceding claim, further comprising: a shield device (25) provided between the measurement device (11) and the processing device (12).

## Patentansprüche

1. Verarbeitungssystem, aufweisend:
einen Einführ-Abschnitt (2), umfassend eine Einführ-Einrichtung (10) zum Einführen von Werkstücken (14);
einen Arbeitsvorgangs-Abschnitt (3, 4), in welchem die Werkstücke gemessen und verarbeitet werden, wobei der Arbeitsvorgangs-Abschnitt in Serie mit dem Einführ-Abschnitt angeordnet ist;
einen Ausführ-Abschnitt (5), welcher in Serie mit dem Arbeitsvorgangs-Abschnitt angeordnet ist und eine Ausführeinrichtung (13) zum Ausführen der Werkstücke umfasst;
eine Gleiteinrichtung (7), welche zwischen einer Messeinrichtung (11) und einer Verarbeitungseinrichtung (12) des Arbeitsvorgangs-Abschnitts angeordnet ist; und
eine Steuerung (9), eingerichtet Steuerung der Einführeinrichtung, der Gleiteinrichtung, der Verarbeitungseinrichtung, der Messeinrichtung und der Ausführeinrichtung auszuführen;
**dadurch gekennzeichnet, dass**:
der Arbeitsvorgangs-Abschnitt von einer Einführ-Abschnitts-Seite aus die Messeinrichtung und die Verarbeitungseinrichtung in dieser Reihenfolge umfasst, wobei die Messeinrichtung von der Verarbeitungseinrichtung separiert ist;
die Gleiteinrichtung eine Vielzahl von Spuren (6a, 6b, 6c) umfasst, wobei die Vielzahl von Spuren jeweils mit Befestigungswerkzeugen (8a, 8b, 8c) ausgestattet ist, welche individuell hin- und herbewegbar sind; und
die Steuerung (9) dazu eingerichtet ist, Steuerung derart auszuführen, dass die Einführeinrichtung die Werkstücke sequenziell auf die jeweiligen Befestigungswerkzeuge bewegt, wobei die Befestigungswerkzeuge entlang der Gleiteinrichtung bewegt werden, die Messeinrichtung einen Werkstückmess-Teilbereich jeden Werkstücks misst und die Verarbeitungseinrichtung jeden der Werkstückmess-Teilbereiche verarbeitet, und die Ausführeinrichtung anschließend die Werkstücke ausführt.

2. Verarbeitungssystem nach Anspruch 1, wobei die Messeinrichtung (11) einen Messsensor (20) und einen Messroboter (11) aufweist.

3. Verarbeitungssystem nach Anspruch 2, ferner aufweisend:
eine Einführkontrolleinrichtung (16), welche in dem Einführ-Abschnitt (2) vorgesehen ist und dazu eingerichtet ist zu kontrollieren, und Positionen der Werkstücke (14) zu bestimmen; und
eine Ausführkontrolleinrichtung (29), welche in dem Ausführ-Abschnitt (5) vorgesehen ist und dazu eingerichtet ist, die Werkstücke zu kontrollieren,
wobei die Einführeinrichtung (10) einen Einführroboter (10) aufweist, die Ausführeinrichtung (13) einen Ausführroboter (13) aufweist, die Werkstücke von der Einführkontrolleinrichtung durch den Einführroboter auf die Befestigungswerkzeuge (8a, 8b, 8c) getragen werden, und die Werkstücke auf eine Ausführkontrolleinrichtung von den Befestigungswerkzeugen durch den Ausführroboter getragen werden.

4. Verarbeitungssystem nach Anspruch 3, wobei die Werkstücke (14) Stahl-Räder für ein Automobil sind, wobei die Einführkontrolleinrichtung (16) dazu eingerichtet ist, jedes der Werkstücke zu kontrollieren und eine Position eines jeden Werkstücks, basierend auf einem Ventilloch oder einer Form von jedem Werkstück, zu bestimmen und wobei die Ausführkontrolleinrichtung (29) dazu eingerichtet ist zu detektieren, ob ein Brems-Sattel das Rad trifft oder nicht.

5. Verarbeitungssystem nach einem der Ansprüche 2, 3 oder 4, wobei die Verarbeitungseinrichtung (12) einen Schweißroboter (12) aufweist; und wobei der Schweißroboter ein Fehlermesssystem umfasst, welches dazu eingerichtet ist einen Positionsfehler zwischen Messpunktdaten des Werkstückmess-Teilbereichs (31), welche von dem Messroboter und dem Werkstückmess-Teilbereich vor dem Schweißen gemessen wurden, zu messen;
wobei die Steuerung (9) dazu eingerichtet ist, eine Kompensationstabelle von Fehlerdaten, gemessen von dem Fehlermesssystem, zu erzeugen; und
wobei das Verarbeitungssystem ferner eine kompensationsbasierte Antriebseinrichtung zum Betreiben des Schweißroboters basierend auf der Kompensationstabelle umfasst.

6. Verarbeitungssystem nach einem der Ansprüche 2, 3 oder 4, wobei die Verarbeitungseinrichtung (12) aufweist:
einen Schweißroboter (12), der dazu eingerichtet ist von der Steuerung (9) gesteuert zu werden, wobei der Schweißroboter ein Fehlermesssystem umfasst und die Steuerung ein Positionsdatengenerierungssystem umfasst, wobei das Positionsdatengenerierungssystem dazu eingerichtet ist, neue Positionsdaten zu generieren durch Steuern des Schweißroboters, um eine Position und eine Orientierung des Schweißroboters, separat, basierend auf den Messpunktdaten des Werkstückmess-Teilbereichs, welche von dem Messroboter gemessen wurden, anzupassen, und wobei das Fehlermesssystem dazu eingerichtet ist, einen Positionsfehler des Schweißroboters zu messen, welcher in Positionsdaten enthalten ist, welche von dem Positionsdatengenerierungssystem generiert wurden, und wobei die Steuerung dazu eingerichtet ist, eine Kompensationstabelle von Fehlerdaten, gemessen von der Fehlermesseinrichtung, zu erzeugen; und
eine kompensationsbasierte Antriebseinrichtung, welche dazu eingerichtet ist den Schweißroboter basierend auf der Kompensationstabelle zu betreiben.

7. Verarbeitungssystem nach Anspruch 5 oder 6, wobei das Fehlermesssystem eine berührungsempfindliche Einrichtung aufweist, welche ein Spitzenende des Schweißroboters (12) und/oder eine visuelle Erkennungseinrichtung umfasst, welche einen visuellen Sensor (32) umfasst.

8. Verarbeitungssystem nach Anspruch 7, wobei die Steuerung (9) für den Schweißroboter (12) dazu eingerichtet ist, eine Kompensationstabelle für den Werkstückmess-Teilbereich (31) zu erzeugen, unter Nutzung einer Eingabe, empfangen von dem Schweißroboter, welcher auf einem Modellwerkstück betrieben wird, welches identisch zu den zu verarbeitenden Werkstücken ist.

9. Verarbeitungssystem nach einem der vorstehenden Ansprüche, ferner aufweisend: eine Abschirmungseinrichtung (25), welche zwischen der Messeinrichtung (11) und der Verarbeitungseinrichtung (12) vorgesehen ist.

## Revendications

1. Système de traitement comprenant :
un étage de chargement (2) incluant un dispositif de chargement (10) pour charger des pièces (14) ;
un étage opératoire (3, 4) dans lequel les pièces sont mesurées et traitées, l'étage opératoire étant disposé en série avec l'étage de chargement ;
un étage de déchargement (5) disposé en série avec l'étage opératoire et incluant un dispositif de déchargement (13) pour décharger les pièces ;
un dispositif de coulissement (7) disposé entre un dispositif de mesure (11) et un dispositif de traitement (12) de l'étage opératoire ; et
une commande (9) configurée pour réaliser une commande du dispositif de chargement, du dispositif de coulissement, du dispositif de traitement, du dispositif de mesure et du dispositif de déchargement ;
**caractérisé en ce que** :
l'étage opératoire inclut le dispositif de mesure et le dispositif de traitement dans cet ordre à partir d'un côté d'étage de chargement de celui-ci, le dispositif de mesure étant séparé du dispositif de traitement ;
le dispositif de coulissement inclut une pluralité de voies (6a, 6b, 6c), la pluralité de voies étant respectivement munies de montages de fixation (8a, 8b, 8c) déplaçables individuellement en va-et-vient ; et
la commande (9) est configurée pour réaliser une commande de sorte que le dispositif de chargement déplace séquentiellement les pièces sur les montages de fixation respectifs, les montages de fixation sont déplacés le long du dispositif de coulissement, le dispositif de mesure mesure une partie de mesure de pièce de chacune des pièces et le dispositif de traitement traite chacune des parties de mesure de pièce, et ensuite le dispositif de déchargement décharge les pièces.

2. Système de traitement selon la revendication 1, dans lequel le dispositif de mesure (11) est constitué d'un capteur de mesure (20) et d'un robot de mesure (11).

3. Système de traitement selon la revendication 2, comprenant en outre :
un dispositif d'inspection d'entrée (16) disposé dans l'étage de chargement (2), configuré pour inspecter et déterminer des positions des pièces (14) ; et
un dispositif d'inspection de sortie (29) disposé dans l'étage de déchargement (5), configuré pour inspecter les pièces,
dans lequel le dispositif de chargement (11) est constitué d'un robot de chargement (10), le dispositif de déchargement (13) est constitué d'un robot de déchargement (13), les pièces sont transportées sur les montages de fixation (8a, 8b, 8c) depuis le dispositif d'inspection d'entrée par le robot de chargement, et les pièces sont transportées sur un dispositif d'inspection de sortie depuis les montages de fixation par le robot de déchargement.

4. Système de traitement selon la revendication 3, dans lequel les pièces (14) sont des roues en acier pour une automobile, le dispositif d'inspection d'entrée (16) est configuré pour inspecter chacune des pièces et déterminer une position de chaque pièce sur la base d'un trou de valve ou d'une forme de chaque pièce, et le dispositif d'inspection de sortie (29) est configuré pour détecter si oui ou non un calibre de rupture heurte la roue.

5. Système de traitement selon la revendication 2, 3 ou 4, dans lequel le dispositif de traitement (12) est constitué d'un robot de soudage (12) ; et
dans lequel le robot de soudage inclut un système de mesure d'erreur configuré pour mesurer une erreur de position entre des données de point de mesure de la partie de mesure de pièce (31) mesurée par le robot de mesure et la partie de mesure de pièce avant soudage ;
dans lequel la commande (9) est configurée pour créer une table de compensation à partir de données d'erreur mesurées par le système de mesure d'erreur ; et
dans lequel le système de traitement inclut en outre un dispositif d'entraînement basé sur une compensation pour faire fonctionner le robot de soudage sur la base de la table de compensation.

6. Système de traitement selon la revendication 2, 3 ou 4, dans lequel le dispositif de traitement (12) est constitué de :
un robot de soudage (12) configuré pour être commandé par la commande (9), le robot de soudage incluant un système de mesure d'erreur et la commande incluant un système de génération de données de position, dans lequel le système de génération de données de position est configuré pour générer de nouvelles données de position en commandant le robot de soudage de manière à ajuster légèrement une position et une orientation du robot de soudage, séparément, sur la base des données de point de mesure de la partie de mesure de pièce mesurée par le robot de mesure, et dans lequel le système de mesure d'erreur est configuré pour mesurer une erreur de position du robot de soudage qui est incluse dans des données de position générées par le système de génération de données de position, et dans lequel la commande est configurée pour créer une table de compensation à partir de données d'erreur mesurées par le dispositif de mesure d'erreur ; et
un dispositif d'entraînement basé sur une compensation configuré pour faire fonctionner le robot de soudage sur la base de la table de compensation.

7. Système de traitement selon la revendication 5 ou 6, dans lequel le système de mesure d'erreur est constitué d'un dispositif tactile incluant une extrémité de pointe du robot de soudage (12) et/ou un dispositif de reconnaissance visuelle incluant un capteur visuel (32).

8. Système de traitement selon la revendication 7, dans lequel la commande (9) pour le robot de soudage (12) est configurée pour créer une table de compensation pour la partie de mesure de pièce (31) en utilisant une entrée reçue du robot de soudage fonctionnant sur une pièce de modèle identique aux pièces devant être traitées.

9. Système de traitement selon l'une quelconque des revendications précédentes, comprenant en outre : un dispositif de protection (25) disposé entre le dispositif de mesure (11) et le dispositif de traitement (12).
